# EUROPÄISCHE PATENTSCHRIFT

(11) **EP 1 599 926 B1**
(45) Veröffentlichungstag und Bekanntmachung des Hinweises auf die Patenterteilung: **13.12.2006**
(21) Anmeldenummer: 04713894.6
(22) Anmeldetag: 24.02.2004
(51) Int. Cl.: H02G 11/00

(54) **Gerätegehäuse mit Kabel**
Applicance housing comprising a cable
Boîtier d'appareil et câble

(30) Priorität: 24.02.2003 DE 10307796
(43) Veröffentlichungstag der Anmeldung: 30.11.2005
(73) Patentinhaber: BSH Bosch und Siemens Hausgeräte GmbH, 81739 München (DE)
(72) Erfinder: KRAUSS, Harald, 73430 Aalen (DE); LAIBLE, Karl-Friedrich, 89129 Langenau (DE)
(86) Internationale Anmeldenummer: PCT/EP2004/001810
(87) Internationale Veröffentlichungsnummer: WO 2004/075367

(56) Entgegenhaltungen:
- DE-A- 10 061 240
- PATENT ABSTRACTS OF JAPAN vol. 2002, no. 12, 12. Dezember 2002 (2002-12-12) & JP 2002 240652 A (SUMITOMO WIRING SYST LTD), 28. August 2002 (2002-08-28)

## Beschreibung

Die vorliegende Erfindung betrifft ein Gerätegehäuse, insbesondere, aber nicht ausschließlich für ein elektrisches Gerät.

Wenn ein derartiges Gerät aus mehreren Komponenten zusammengefügt wird, die durch Kabel verbunden werden müssen, so muss für die Montage das Kabel in manchen Fällen länger sein, als bei dem fertig montierten Gerät letztlich erforderlich. Wenn ein solches überlanges Kabel nicht sicher am Gerät befestigt ist, so besteht die Gefahr, dass es aus dem Gehäuse herausragt und versehentlich Zugkräften ausgesetzt ist, die es aus seinem Anschluss herausreißen können. Wenn dies geschieht, ist das Gerät im Allgemeinen nicht mehr funktionstüchtig. Darüber hinaus kann jedoch von einem solchen herausgerissenen Kabel, wenn es zur Übertragung hoher - meist elektrischer, eventuell aber auch optischer - Leistungen dient, eine Gefährdung für Personen ausgehen. Es ist daher in den Sicherheitsvorschriften der VDE festgelegt, dass Maßnahmen getroffen werden müssen, um zu verhindern, dass eine solche Überlänge eines Kabels über die Außenkonturen des Gerätes hinaus gezogen werden kann. Die Überlänge muss also im Innern des Geräts sicher untergebracht und fixiert werden.

Eine herkömmliche Lösung dieses Problems ist, eine solche überlange Leitung am Gehäuse abzudecken, so dass sie nicht mehr zugänglich ist. Eine solche Abdeckung erfordert in der Regel zusätzliche Teile, deren Fertigung und Anbringung am Gerät Kosten verursacht.

Eine andere bekannte Lösung ist, ein solches Kabel im Innern des Gehäuses an einer oder mehreren Stellen durch Kabelbinder, Klemmen oder dergleichen zu fixieren. Diese Lösung erfordert zwar von den Kabelbindern bzw. Klemmen abgesehen keine zusätzlichen Teile, doch ist die Fixierung des Kabels in der Regel arbeitsaufwändig und verursacht somit ebenfalls unerwünschte Kosten.

Aufgabe der vorliegenden Erfindung ist, ein Gerätegehäuse anzugeben, bei dem ein Kabel mit Überlänge mit minimalen Kosten- und Arbeitsaufwand sicher fixierbar ist.

Die Aufgabe wird gelöst durch ein Gerätegehäuse mit den Merkmalen des Anspruchs 1.

Wenn bei einem solchen Gerätegehäuse ein überlanges Kabel an einer Wandfläche von einem ersten Punkt zu einem zweiten Punkt verläuft, so ist das Kabel, wenn es nicht fixiert worden ist, auf Grund seiner Überlänge auf der Wandfläche bis zu einer Grenze verschiebbar, an der es straff gespannt ist. Die Erfindung schlägt vor, in der Nähe dieser Grenze ein Sperrelement für das Kabel anzubringen, das für das Kabel nur in einer Richtung, nämlich zur Grenze hin, passierbar ist. Um das Kabel zu fixieren, genügt es dann, das Kabel hinter das Sperrelement zu verschieben, damit es straff gespannt an der Wandfläche anliegt und infolgedessen nicht mehr über die Außenkonturen des Gerätes überstehen kann.

Das Sperrelement ist vorzugsweise mit einem bezüglich des Gerätegehäuses festen Träger flexibel verbunden, so dass es bei der Bewegung des Kabels zur Grenze hin flexibel ausweichen kann, um das Kabel passieren zu lassen, und anschließend selbsttätig in eine Sperrstellung zurückkehrt.

Vorzugsweise ist ein solches Sperrelement mit dem Träger einteilig ausgebildet; es kommt jedoch auch eine gelenkige Verbindung zwischen Sperrelement und Träger in Betracht.

Als Träger für das Sperrelement kann die Wandfläche selbst dienen.

Einer bevorzugten Ausgestaltung zufolge ist der Wand eine Außenschale vorgeblendet, und die Außenschale dient als Träger für das Sperrelement.

Die Erfindung ist auf unterschiedlichste Gehäusegeometrien anwendbar; besonders effektiv ist sie, wenn die Wandfläche eine erste und eine zweite Seite umfasst, die an einer Außenkante aufeinandertreffen, wobei der erste Punkt an der ersten Seite und der zweite Punkt an der zweiten Seite liegt.

Bei einem solchen Gerätegehäuse ist das Sperrelement der guten Erreichbarkeit wegen vorzugsweise an der Außenkante angeordnet.

Selbstverständlich können auch mehrere Sperrelemente zum Fixieren eines einzigen Kabels dienen, mit anderen Worten kann bei einem Gerätegehäuse wie oben definiert bereits einer der zwei Punkte, welche das Kabel verbindet, durch ein weiteres Sperrelement definiert sein, an welchem das Kabel bereits gefangen, wenn auch noch nicht vollständig gestrafft ist.

Eine bevorzugte Anwendung des erfindungsgemäßen Gerätegehäuses sind Gehäuse für Haushaltsgeräte in Tischbauweise. Diese haben im Allgemeinen ein Bedienfeld an der Vorderseite, in dessen unmittelbarer Nachbarschaft auch eine Steuerschaltung zum Steuern der Funktionen des Geräts angebracht ist. Von der Steuerschaltung gesteuerte Einrichtungen, wie etwa im Falle eines Kältegerätes der Verdichter, sind häufig im unteren rückwärtigen Bereich des Geräts untergebracht, so dass ein Verbindungskabel zwischen beiden verlegt werden muss, das erfindungsgemäß mit dem Sperrelement gesichert werden kann.

Bei einem solchen Haushaltsgerät kann die vorgeblendete Außenschale insbesondere eine in einen Rahmen gefasste Tischplatte sein, wobei dann das Sperrelement einteilig mit dem Rahmen ausgebildet sein kann. Insbesondere wenn der Rahmen aus Kunststoff gefertigt, insbesondere gespritzt ist, sind die Herstellungskosten des Rahmens so gut wie unabhängig davon, ob das Sperrelement vorhanden ist oder nicht, so dass dies eine besonders preiswerte Lösung darstellt.

Eine weitere Möglichkeit ist, das Sperrelement einteilig mit einem Lüftungsgitter auszubilden, das als Teil der Außenschale vorgesehen ist. Selbstverständlich sind beide Konstruktionsmöglichkeiten kombinierbar, indem das Lüftungsgitter als Teil des die Tischplatte einfassenden Rahmens integriert wird.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine schematische Ansicht eines Kühlschrankgehäuses in Tischbauweise, mit fortgelassener Tischplatte und einem ungesicherten Kabel;

- Fig. 2: ein Beispiel für ein Sperrelement;
- Fig. 3: das Gehäuse mit gesichertem Kabel;
- Fig. 4: ein Kühlschrankgehäuse mit teilweise aufgeschnitten dargestellter Tischplatte;
- Fig. 5: einen Schnitt durch einen Teil des Gehäuses entlang der Linie V-V aus Fig. 4;
- Fig. 6: eine perspektivische Ansicht eines für eine Tischplatte eines Haushaltsgeräts in Tischbauweise; und
- Fig. 7: den Rahmen aus Fig. 6 montiert an einem Haushaltsgerät und mit durch ein Sperrelement des Rahmens gesichertem Kabel.

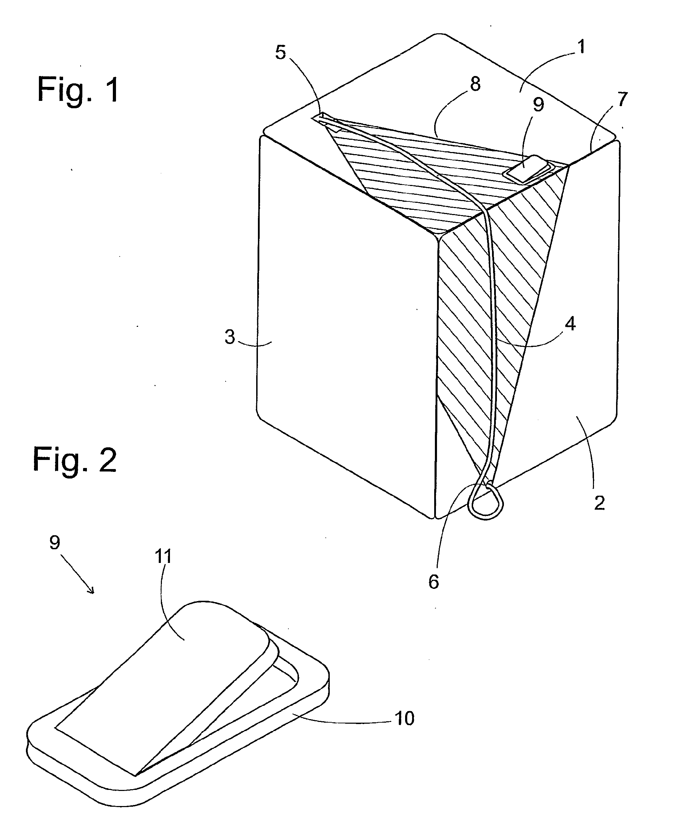

Fig. 1 zeigt eine schematische perspektivische Ansicht des Korpus eines Kühlschranks in Tischbauweise, mit weggelassener Tischplatte. Zu sehen sind die Oberseite 1, die Rückseite 2 und eine Seitenwand 3 des Korpus. An der vom Betrachter abgewandten Vorderseite des Gehäuses befindet sich ein elektronisches Steuermodul, von dem am Punkt 5 ein elektrisches Kabel 4 ausgeht, das zu einem Anschlusspunkt 6 führt und das Steuermodul mit einem im unteren Bereich der Rückseite 2 angebrachten Verdichter verbindet. Ein ebenfalls an der Rückseite 2 angebrachter Verflüssiger ist in der Figur der Übersichtlichkeit halber nicht gezeigt.

Das Kabel 4 ist um einige Zentimeter länger als der direkte Weg vom Punkt 5 zum Punkt 6 über die Seiten 1 und 2 des Gehäuses. Wenn man das Kabel 4 in Höhe der Außenkante 7 des Gehäuses zwischen Oberseite 1 und Rückseite 2 fasst und entlang der Außenkante 7 verschiebt, so ist das Kabel innerhalb der in der Figur schraffiert dargestellten Fläche bis zu einer Grenze 8 verschiebbar, an der das Kabel straff gespannt ist.

In der Nähe der Grenze 8 und der Außenkante 7 ist an der Oberseite 1 des Gehäuses ein Sperrelement 9 befestigt. Das Sperrelement 9 hat hier, wie in Fig. 2 vergrößert gezeigt, die Gestalt eines Plättchens aus einem flexiblen Kunststoffmaterial, das durch einen U-förmigen Schnitt in einen Rahmen 10 und eine gegen den Rahmen 10 schräg nach oben abgebogene Zunge 11 aufgeteilt ist. Das Sperrelement 9 ist z.B. auf die Oberseite 1 aufgeklebt, wobei das freie Ende der Zunge 11 in Richtung der Grenze 8 weist.

Wenn das Kabel 4 aus seiner in Fig. 1 gezeigten Stellung über das Sperrelement 9 in Richtung der Grenze 8 hinweggeschoben wird, so taucht die Zunge 11 unter dem Druck des Kabels zeitweilig in den Rahmen 10 ein, um das Kabel passieren zu lassen, kehrt jedoch anschließend in seine in der Figur gezeigte Stellung zurück.

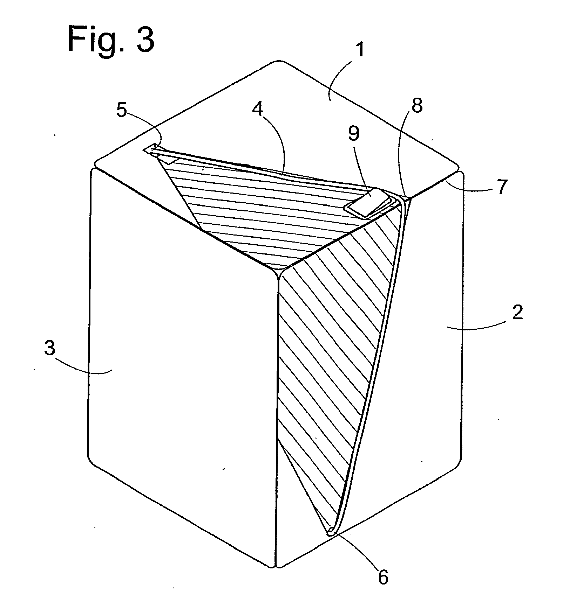

Fig. 3 zeigt das Kältegerät, nachdem das Kabel 4 über Sperrelement 9 hinweg geschoben worden ist. Das Kabel 4 ist nun im Wesentlichen straff gespannt, so dass es nicht möglich ist, es über die vorstehende Zunge 11 hinweg zu heben und so in die Stellung der Fig. 1 zurückzuführen. Dies ist nur möglich, wenn gleichzeitig die Zunge 11 eingedrückt wird.

Das Sperrelement 9 könnte im Prinzip an einer beliebigen Stelle an der Oberseite 1 oder der Rückseite 2 des Gehäuses angebracht sein. Eine Platzierung in der Nähe der Außenkante 7 ist allerdings bevorzugt, da dort auch bei kleinem Überstand der Zunge 11 über die Oberfläche, an der das Sperrelement 9 montiert ist, eine wirksame Sicherung möglich ist. Wenn das Sperrelement 9 in einem mittigen Bereich zwischen der Außenkante 7 und einem der Punkte 5, 6 platziert wäre, so wäre für eine wirksame Sicherung des Kabels 4 ein wesentlich weiterer Überstand der Zunge 11 über den Rahmen 10 des Sperrelements 9 erforderlich.

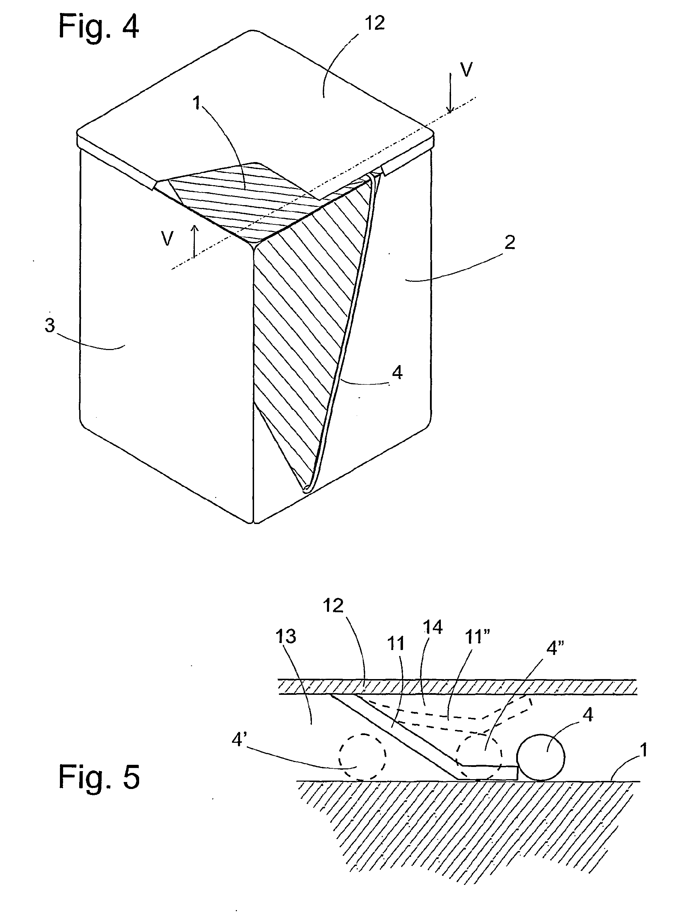

Bei einem Kühlschrank in Tischbauweise, wie in Fig. 4 schematisch dargestellt, kann nicht nur der Korpus selbst, wie in Fig. 1 und 3 dargestellt, sondern auch eine darauf montierte Tischplatte 12 als Träger für ein Sperrelement dienen.

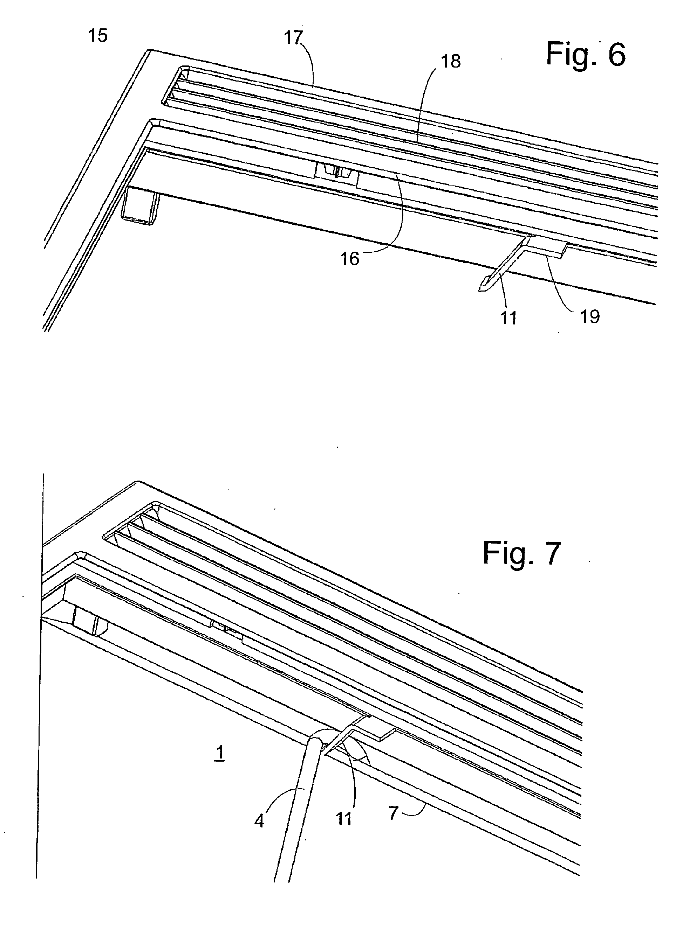

Fig. 5 veranschaulicht dies anhand eines Schnitts entlang der Linie V-V aus Fig. 4. Hier ist das Sperrelement 9 durch eine flexible Zunge 11 gebildet, die sich ausgehend von der Tischplatte 12 schräg durch einen Zwischenraum 13 in Richtung der Oberseite 1 des Korpus erstreckt. Eine Ruheposition der Zunge 11 ist in der Figur mit durchgezogenen Linien dargestellt. Unmittelbar nach dem Zusammenbau des Kältegeräts befindet sich das Kabel 4 in einem ungesicherten Zustand, in Fig. 5 links von der Zunge 11. Die Figur zeigt das Kabel in diesem Zustand als gestrichelten Umriss 4'. Wenn das Kabel zum Sichern nach rechts verschoben wird, so wird dadurch zunächst die Zunge 11 gegen die Tischplatte 12 zurückgedrängt, wie in der Figur durch die gestrichelten Umrisse 4" des Kabels und 11" der Zunge dargestellt. Wenn das Kabel die Zunge passiert hat, kehrt diese in ihren durchgezogen dargestellten entspannten Zustand zurück, in welchem das freie Ende der Zunge 11 an der Oberseite 1 anliegt, wie in der Figur gezeigt, oder doch zumindest der Abstand zwischen der Zunge 11 und der Oberseite 1 deutlich geringer ist als der Durchmesser des Kabels. Das Kabel kann so aus seiner als durchgezogener Umriss 4 dargestellten gesicherten Stellung unter dem Einfluss einer Zugkraft nicht das Sperrelement passieren; es kann allenfalls in den Zwickel 14 zwischen der Zunge 11 und der Tischplatte 12 eindringen, wobei es allerdings in diesem Zustand die Zunge 11 gegen die Oberseite 1 drückt und ein Passieren des Sperrelements 9 erst recht unmöglich ist.

Eine besonders bevorzugte Ausgestaltung der erfindungsgemäßen Kabelsicherung ist anhand der Figs. 6 und 7 dargestellt. Bei dieser Ausgestaltung ist die Tischplatte 12 des Kältegeräts aufgebaut aus einem aus Kunststoff spritzgegossenen Rahmen 15, der vorgesehen ist, um am Korpus 1 montiert zu werden und in einem zentralen Fenster eine Arbeitsplatte aufzunehmen. Die Figs. 6 und 7 zeigen jeweils in einer perspektivischen Ansicht schräg von vorn einen Teil des Rahmens 15, wobei die Arbeitsplatte weggelassen ist. Der in der Figur gezeigte hintere Teil des Rahmens 15 umfasst ein von einer vorderen und einer hinteren Querstrebe 16 bzw. 17 eingefasstes Lüftungsgitter 18, das über dem an der Rückseite 2 des Korpus montierten Verflüssiger angeordnet ist. Die vordere Querstrebe 16 verläuft in etwa in der Ebene der Rückseite 2. An der vorderen Querstrebe 16 ist ein nach vorn orientierter Vorsprung 19 angeformt, von dem aus sich eine Zunge 11, die das Sperrelement bildet, schräg nach unten erstreckt. Die Länge der Zunge 11 ist so bemessen, dass ihr freies Ende die Oberseite 1 des Korpus, in Fig. 6 nicht gezeigt, berührt.

Fig. 7 zeigt den gleichen Rahmen 15, an der Oberseite 1 des Kühlschranks montiert. In dieser Figur ist das Kabel 4 zu erkennen, das, nachdem es - von rechts nach links in der Figur - zwischen der Zunge 11 und der Oberseite 1 des Korpus hindurch geschoben worden ist, straff gespannt an der Zunge 11 anliegt.

## Patentansprüche

1. Gerätegehäuse mit einer Wandfläche (1, 2) und wenigstens einem sich an der Wandfläche (1, 2) von einem ersten Punkt (5) zu einem zweiten Punkt (6) erstreckenden Kabel (4), dessen Länge größer ist als eine kürzeste über die Wandfläche (1, 2) verlaufende Verbindung zwischen den zwei Punkten (5, 6), so dass es auf den Wandflächen (1, 2) auf einem begrenzten Flächenstück verschiebbar ist, wobei eine Grenze (8) des Flächenstücks **dadurch** definiert ist, dass das Kabel (4) straff gespannt ist, wenn sich ein Punkt von ihm an der Grenze (8) befindet, **dadurch gekennzeichnet, dass** an dem begrenzten Flächenstück in der Nähe von dessen Grenze (8) ein für das Kabel (4) nur in einer Richtung, zur Grenze hin, passierbares Sperrelement (9) angebracht ist.

2. Gerätegehäuse nach Anspruch 1, **dadurch gekennzeichnet, dass** das Sperrelement (9) mit einem Träger flexibel verbunden ist.

3. Gerätegehäuse nach Anspruch 2, **dadurch gekennzeichnet, dass** das Sperrelement (9) mit dem Träger einteilig ausgebildet ist.

4. Gerätegehäuse nach Anspruch 1, **dadurch gekennzeichnet, dass** das Sperrelement (9) mit einem Träger gelenkig verbunden ist.

5. Gerätegehäuse nach einem der vorhergehenden Ansprüche, **dadurch gekennzeichnet, dass** die Wandfläche (2, 3) der Träger ist.

6. Gerätegehäuse nach einem der vorhergehenden Ansprüche, **dadurch gekennzeichnet, dass** einer Wand (1) eine Außenschale (12) vorgeblendet ist, und dass die Außenschale (12) der Träger ist.

7. Gerätegehäuse nach einem der vorhergehenden Ansprüche, **dadurch gekennzeichnet, dass** die Wandfläche eine erste und eine zweite Seite (1, 2) umfasst, die an einer Außenkante (7) aufeinandertreffen, und dass der erste Punkt (5) an der ersten Seite (1) und der zweite Punkt (6) an der zweiten Seite (2) liegt.

8. Gerätegehäuse nach Anspruch 7, **dadurch gekennzeichnet, dass** das Sperrelement (9) an der Außenkante (7) angeordnet ist.

9. Gerätegehäuse nach einem der vorhergehenden Ansprüche, **dadurch gekennzeichnet, dass** wenigstens einer der zwei Punkte (5, 6) durch ein weiteres Sperrelement definiert ist.

10. Gerätegehäuse nach einem der vorhergehenden Ansprüche, **dadurch gekennzeichnet, dass** es ein Haushaltsgerätegehäuse in Tischbauweise ist.

11. Gerätegehäuse nach Anspruch 6 und Anspruch 10, **dadurch gekennzeichnet, dass** die Außenschale (12) eine in einen Rahmen (15) gefasste Tischplatte umfasst, und dass das Sperrelement (9) einteilig mit dem Rahmen (15) ausgebildet ist.

12. Gerätegehäuse nach Anspruch 6 und Anspruch 10, **dadurch gekennzeichnet, dass** die Außenschale (12) ein Lüftungsgitter (18) umfasst und dass das Sperrelement (9) einteilig mit dem Lüftungsgitter (18) ausgebildet ist.

## Claims

1. Appliance housing with a wall surface (1, 2) and at least one cable (4), which extends at the wall surface (1, 2) from a first point (5) to a second point (6) and the length of which is greater than a shortest connection, which extends over the wall surface (1, 2), between the two points (5, 6) so that it is displaceable on the wall surfaces (1, 2) on a limited piece of area, wherein a boundary (8) of the piece of area is defined by the cable (4) being tightly tensioned when a point thereof is disposed at the boundary (8), **characterised in that** a blocking element (9) is mounted at the limited piece of area in the vicinity of the boundary (8) and can be passed by the cable (4) only in one direction towards the boundary.

2. Appliance housing according to claim 1, **characterised in that** the blocking element (9) is flexibly connected with a support.

3. Appliance housing according to claim 2, **characterised in that** the blocking element (9) is constructed integrally with the support.

4. Appliance housing according to claim 1, **characterised in that** the blocking element (9) is pivotably connected with a support.

5. Appliance housing according to one of the preceding clams, **characterised in that** the wall surface (2, 3) is the support.

6. Appliance housing according to one of the preceding clams, **characterised in that** an outer shell (12) covers a wall (1) and that the outer shell (12) is the support.

7. Appliance housing according to one of the preceding clams, **characterised in that** the wall surface has a first and a second side (1, 2), which meet at an outer edge (7), and that the first point (5) lies at the first side (1) and the second point (6) at the second side (2).

8. Appliance housing according to claim 7, **characterised in that** the blocking element (9) is arranged at the outer edge (7).

9. Appliance housing according to one of the preceding clams, **characterised in that** at least one of the two points (5, 6) is defined by a further blocking element.

10. Appliance housing according to one of the preceding clams, **characterised in that** it is an appliance housing housing in bench mode of construction.

11. Appliance housing according to claim 6 and claim 10, **characterised in that** the outer shell (12) comprises a tabletop, which is bounded by a frame (15), and that the blocking element (9) is constructed integrally with the frame (15).

12. Appliance housing according to claim 6 and claim 10, **characterised in that** the outer shell (12) comprises a ventilation grid (18) and that the blocking element (9) is constructed integrally with the ventilation grid (18).

## Revendications

1. Boîtier d'appareil comprenant une surface murale (1, 2) et au moins un câble (4) s'étendant sur la surface murale (1, 2) d'un premier point (5) vers un deuxième point (6), dont la longueur est plus grande qu'une liaison la plus courte, s'étendant sur la surface murale (1, 2), entre les deux points (5, 6), de sorte qu'il est coulissant sur les surfaces murales (1, 2) sur un morceau de surface limité, une limite (8) du morceau de surface étant défini du fait que le câble (4) est fortement tendu lorsqu'un point de lui se trouve à la limite (8), **caractérisé en ce qu'**un élément de blocage (9), passable pour le câble (4) seulement dans un sens, en direction de la limite, est installé sur le morceau de surface limité, à proximité de la limite (8) de celui-ci.

2. Boîtier d'appareil selon la revendication 1, **caractérisé en ce que** l"élément de blocage (9) est raccordé de manière flexible à un support.

3. Boîtier d'appareil selon la revendication 2, **caractérisé en ce que** l"élément de blocage (9) est exécuté d'une seule pièce avec le support.

4. Boîtier d'appareil selon la revendication 1, **caractérisé en ce que** l"élément de blocage (9) est raccordé de manière articulée à un support.

5. Boîtier d'appareil selon l'une quelconque des revendications précédentes, **caractérisé en ce que** la surface murale (2, 3) est le support.

6. Boîtier d'appareil selon l'une quelconque des revendications précédentes, **caractérisé en ce qu'**une coque extérieure (12) est installée devant une paroi (1) en guise d'obturateur, et **en ce que** la coque extérieure (12) est le support.

7. Boîtier d'appareil selon l'une quelconque des revendications précédentes, **caractérisé en ce que** la surface murale comprend un premier et un deuxième côtés (1, 2) qui se rencontrent sur une arête extérieure (7), et **en ce que** le premier point (5) est situé sur le premier côté (1) et le deuxième point (6) sur le deuxième côté (2).

8. Boîtier d'appareil selon la revendication 7, **caractérisé en ce que** l'élément de blocage (9) est disposé sur l'arête extérieure (7).

9. Boîtier d'appareil selon l'une quelconque des revendications précédentes, **caractérisé en ce qu'**au moins un des deux points (5, 6) est défini par un élément de blocage supplémentaire.

10. Boîtier d'appareil selon l'une quelconque des revendications précédentes, **caractérisé en ce qu'**il s'agit d'un boîtier d'appareil ménager de construction avec plateau.

11. Boîtier d'appareil selon la revendication 6 et la revendication 10, **caractérisé en ce que** la coque extérieure (12) est un plateau de table monté dans un cadre (15) et **en ce que** l'élément de blocage (9) est exécuté d'une seule pièce avec le cadre (15).

12. Boîtier d'appareil selon la revendication 6 et la revendication 10, **caractérisé en ce que** la coque extérieure (12) comprend une grille d'aération (18) et **en ce que** l'élément de blocage (9) est exécuté d'une seule pièce avec la grille d'aération (18).
